(19) 

**Europäisches Patentamt**
**European Patent Office**
**Office européen des brevets**

(11) **EP 4 589 350 A1**

(12) **EUROPEAN PATENT APPLICATION**
published in accordance with Art. 153(4) EPC

(43) Date of publication:
**23.07.2025 Bulletin 2025/30**

(21) Application number: **23865335.6**

(22) Date of filing: **01.09.2023**

(51) International Patent Classification (IPC):
*G02B 6/126* (2006.01)   *G02B 6/12* (2006.01)
*G02B 6/122* (2006.01)   *G02B 6/125* (2006.01)
*G02B 6/42* (2006.01)

(52) Cooperative Patent Classification (CPC):
**G02B 6/12; G02B 6/122; G02B 6/125; G02B 6/126; G02B 6/42**

(86) International application number:
**PCT/JP2023/032137**

(87) International publication number:
**WO 2024/057980 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.09.2022 JP 2022148601
09.12.2022 JP 2022197457**

(72) Inventors:
• **MATSUI Naoki**
  **Kyoto-shi, Kyoto 612-8501 (JP)**
• **UEMURA Hirotaka**
  **Kyoto-shi, Kyoto 612-8501 (JP)**

(74) Representative: **Viering, Jentschura & Partner
mbB**
**Patent- und Rechtsanwälte**
**Am Brauhaus 8**
**01099 Dresden (DE)**

(71) Applicant: **Kyocera Corporation
Kyoto-shi, Kyoto 612-8501 (JP)**

(54) **OPTICAL INTEGRATED CIRCUIT, AND OPTICAL TRANSCEIVER**

(57)   An optical integrated circuit includes a first element having a function of separating each polarization from electromagnetic waves including multiple polarizations, or a function of rotating at least some of the polarizations after separating each polarization from electromagnetic waves including multiple polarizations, and a second element having a function of separating components of multiple wavelengths included in the electromagnetic waves into components of each wavelength. The first element and the second element are connected to each other in a cascade-like manner.

FIG. 31

EP 4 589 350 A1

# Description

## CROSS-REFERENCE TO RELATED APPLICATIONS

This application claims priority of Japanese Patent Application No. 2022-148601 (filed September 16, 2022) and Japanese Patent Application No. 2022-197457 (filed December 9, 2022), the entire disclosures of which are hereby incorporated by reference.

## TECHNICAL FIELD

The present disclosure relates to an optical integrated circuit and an optical transceiver.

## BACKGROUND OF INVENTION

A known wavelength multiplexing/demultiplexing element can expand an effective wavelength band (see, for example, Patent Literature 1).

## CITATION LIST

## PATENT LITERATURE

Patent Literature 1: Japanese Unexamined Patent Application Publication No. 2020-194092

## SUMMARY

In an embodiment of the present disclosure, an optical integrated circuit includes a first element and a second element. The first element has a function of separating each polarization from electromagnetic waves including multiple polarizations, or a function of rotating at least some of the polarizations after separating each polarization from electromagnetic waves including multiple polarizations. The second element has a function of separating multiple wavelength components included in the electromagnetic waves into components of each wavelength. The first element and the second element are connected to each other in cascade-like manner.

In an embodiment of the present disclosure, an optical transceiver may include the optical integrated circuit.

## BRIEF DESCRIPTION OF THE DRAWINGS

FIG. 1 is a block diagram illustrating an example configuration of an optical integrated circuit according to an embodiment.
FIG. 2 is a block diagram illustrating an example configuration of an optical integrated circuit including an edge coupler as an input unit.
FIG. 3 is a block diagram illustrating an example configuration of an optical integrated circuit when the optical integrated circuit includes a two-dimensional grating coupler as an input unit.
FIG. 4 is a block diagram illustrating an example configuration of an optical integrated circuit obtained when the example configuration in FIG. 2 further includes delayers.
FIG. 5 is a block diagram illustrating an example configuration of an optical integrated circuit obtained when a polarizing splitter rotator in the example configuration in FIG. 4 is replaced with a polarizing splitter.
FIG. 6 is a block diagram illustrating an example configuration of an optical integrated circuit obtained when delayers connected before photodiodes in the example configuration in FIG. 4 are replaced with variable attenuators.
FIG. 7 is a block diagram illustrating an example configuration of an optical integrated circuit obtained when the example configuration in FIG. 6 further includes delayers between photodiodes and variable attenuators connected before the photodiodes.
FIG. 8 is a block diagram illustrating an example configuration of an optical integrated circuit according to an embodiment.
FIG. 9 is a plan view illustrating an example configuration of a polarizing splitter rotator according to an embodiment.
FIG. 10 is a sectional view taken along line B-B in FIG. 9.
FIG. 11 is a sectional view taken along line C-C in FIG. 9.
FIG. 12 is a sectional view taken along line D-D in FIG. 9.
FIG. 13 is a sectional view taken along line E-E in FIG. 9.
FIG. 14 is a sectional view taken along line F-F in FIG. 9.
FIG. 15 is a graph illustrating an example of simulation results of output characteristics of a polarizing splitter rotator according to an embodiment.
FIG. 16 is a graph illustrating an example of measurement results of output characteristics of a polarizing splitter rotator according to an embodiment.
FIG. 17 is a block diagram illustrating an example configuration of a demultiplexer according to an embodiment.
FIG. 18 is a graph illustrating an example of measurement results of loss characteristics of a demultiplexer.
FIG. 19A is a sectional view illustrating an example of a strip-type waveguide.
FIG. 19B is a sectional view illustrating an example of a rib-type waveguide.
FIG. 20 is a diagram illustrating an example arrangement of wavelength multiplexing/demultiplexing elements and ports of the demultiplexer in FIG. 17.
FIG. 21 is a diagram illustrating an example arrangement of waveguides of a wavelength multiplexing/-demultiplexing element.

FIG. 22 is a graph illustrating an example of measurement results of the magnitude of loss for each polarization component of electromagnetic waves propagating in a rib-type waveguide.

FIG. 23 is a graph illustrating an example of measurement results for a component with a wavelength $\lambda 1$ further separated by a demultiplexer from a TE-mode polarization separated by a polarizing splitter rotator.

FIG. 24 is a graph illustrating an example of measurement results for a component with a wavelength $\lambda 3$ further separated by a demultiplexer from a TE-mode polarization separated by a polarizing splitter rotator.

FIG. 25 is a graph illustrating an example of measurement results for a component with a wavelength $\lambda 4$ further separated by a demultiplexer from a TE-mode polarization separated by a polarizing splitter rotator.

FIG. 26 is a graph illustrating an example of measurement results for a component with a wavelength $\lambda 2$ further separated by a demultiplexer from a TE-mode polarization separated by a polarizing splitter rotator.

FIG. 27 is a graph illustrating an example of measurement results for a component with a wavelength $\lambda 1$ further separated by a demultiplexer from a TM-mode polarization separated by a polarizing splitter rotator.

FIG. 28 is a graph illustrating an example of measurement results for a component with a wavelength $\lambda 3$ further separated by a demultiplexer from a TM-mode polarization separated by a polarizing splitter rotator.

FIG. 29 is a graph illustrating an example of measurement results for a component with a wavelength $\lambda 4$ further separated by a demultiplexer from a TM-mode polarization separated by a polarizing splitter rotator.

FIG. 30 is a graph illustrating an example of measurement results for a component with a wavelength $\lambda 2$ further separated by a demultiplexer from a TM-mode polarization separated by a polarizing splitter rotator.

FIG. 31 is a block diagram illustrating an example configuration obtained when a polarizing splitter rotator in the optical integrated circuit in FIG. 8 is replaced with a polarizing splitter.

DESCRIPTION OF EMBODIMENTS

The performance of wavelength separation may not be maintained for inputs with unspecified polarizations. In the present disclosure, an optical integrated circuit and an optical transceiver can perform wavelength separation with good performance for inputs with unspecified polarizations.

Direct-modulation direct-detection methods are widely used in optical communication in data centers due to the convenience and low power consumption of digital signal processors. On the other hand, as the amount of optical communication traffic in data centers increases, higher-density data transmission is required, and optical transceivers including silicon-based optical integrated circuits, in particular, compact wavelength multiplexing optical circuits, are being considered. In this case, a series Mach-Zehnder interference system or arrayed waveguide gratings can be used as wavelength multiplexing optical circuits realized using silicon. All of these wavelength multiplexing optical circuits are characterized by the fact that their characteristics vary greatly depending on the polarization of light. On the other hand, single-mode optical fibers are widely used in existing optical fiber networks in data centers. However, this type of optical fiber does not have a characteristic of maintaining the polarization. Therefore, the polarization of light changes randomly each time light passes through curved portions or connecting portions of wiring. Therefore, an optical integrated circuit needs to be designed so that the characteristics of the optical integrated circuit are uniform for any polarization. An optical integrated circuit with uniform characteristics for any polarization is realized by providing a polarizing splitter rotator in a former stage of an optical circuit, separating incident light into a TE (transverse electric) component and a TM (transverse magnetic) component, injecting each of these components into a separate wavelength multiplexing optical circuit, allowing the outputs of the wavelength-division multiplexing circuits to be received by photodiodes, and detecting the sum of the outputs of the photodiodes corresponding to respective polarization components.

If the degree of separation of polarization components (extinction ratio) is low, the wavelengths may not be properly separated. In addition, interference between a previous signal frame and a subsequent signal frame, also known as jitter, can occur. Therefore, the extinction ratio needs to be increased.

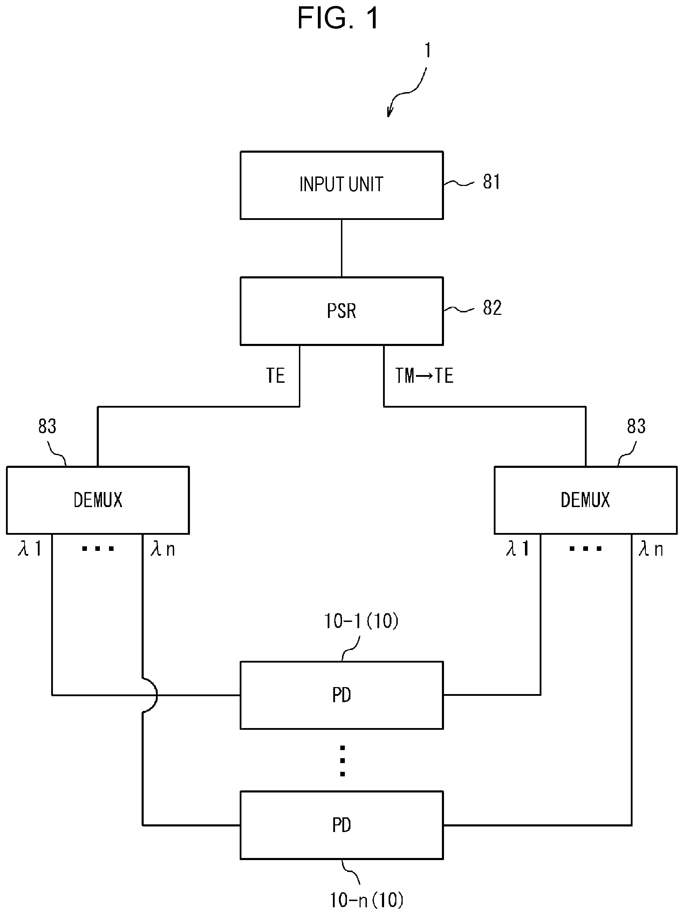

In an embodiment of the present disclosure, an optical integrated circuit 1 (see FIG. 1 etc.) may be used in combination with a configuration for transmitting optical signals in an optical communication system. The configuration for transmitting optical signals may include a light source and a modulator.

The light source may include a semiconductor laser such as an LD (laser diode) or a VCSEL (vertical cavity surface emitting laser). The light source may include a device that emits electromagnetic waves of various wavelengths, not limited to visible light. The modulator modulates electromagnetic waves by changing the intensity of the electromagnetic waves. The modulator may pulse modulate the electromagnetic waves, for example.

The configuration for transmitting optical signals may further include a signal input unit. The signal input unit accepts input of signals from external devices, etc. The signal input unit may include a D/A converter, for example. The signal input unit outputs a signal to a modulator. The modulator modulates electromagnetic waves based on a signal acquired by the signal input unit.

(Example Configuration of Optical Integrated Circuit 1)

The optical integrated circuit 1 is configured to receive an optical signal. Hereafter, an example configuration of the optical integrated circuit 1 according to an embodiment of the present disclosure will be described.

As illustrated in FIG. 1, the optical integrated circuit 1 includes an input unit 81, a polarizing splitter rotator (PSR) 82, demultiplexers (demultiplexers or DEMUXs) 83, and photodiodes (PDs) 10.

The input unit 81 is configured to accept input of an optical signal generated by a modulator etc. described above. The polarizing splitter rotator 82 separates a TE-mode optical signal and a TM-mode optical signal included in an input optical signal, and converts the TM-mode optical signal to a TE-mode optical signal. The demultiplexers 83 separate the TE-mode optical signal separated by the polarizing splitter rotator 82 and the TE-mode optical signal converted from the TM-mode optical signal separated by the polarizing splitter rotator 82 into optical signals for each wavelength. In FIG. 1, the demultiplexers 83 are each configured to separate the optical signal into n light with n different wavelengths represented by λ1 to λn.

The photodiodes 10 include photodiodes 10-1 to 10-n, which correspond to respective wavelengths of light. Each photodiode 10 is connected to the demultiplexer 83 that separates a TE-mode optical signal by wavelength and the demultiplexer 83 that separates a TE-mode optical signal converted from the TM-mode optical signal by wavelength. The polarization components of the TE mode or the TM mode may be detected by separate photodiodes 10 or may be detected by a single photodiode 10.

(Example Configuration of Optical Integrated Circuit 1)

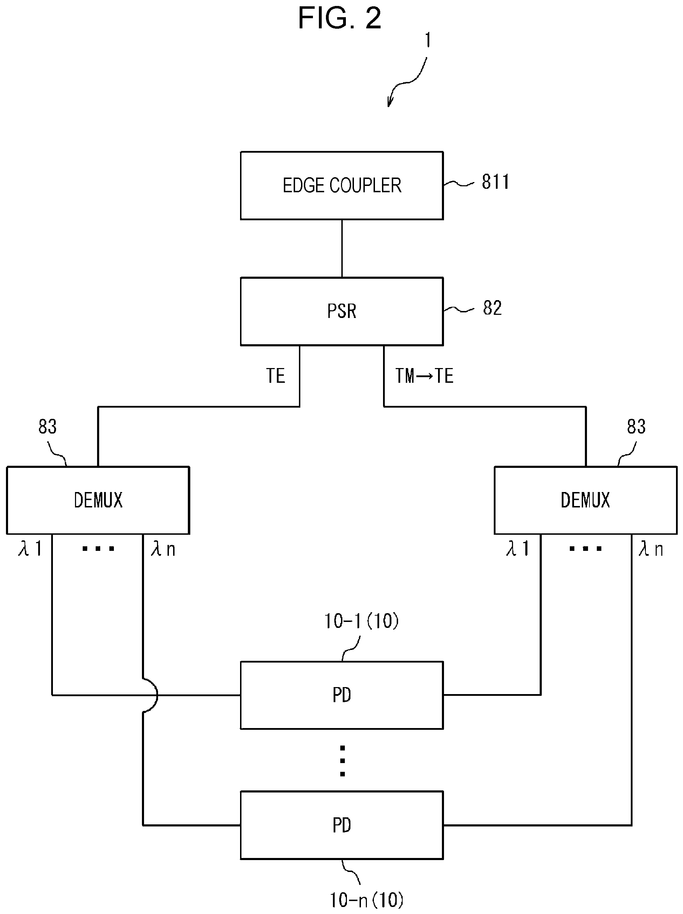

As illustrated in FIG. 2, the optical integrated circuit 1 may be configured using photodiodes 10 having input ports located in two directions. The optical integrated circuit 1 includes an edge coupler 811 as the input unit 81. The edge coupler 811 is configured to input light from a chip end surface. The optical integrated circuit 1 also includes the polarizing splitter rotator (PSR) 82 and the demultiplexers (DEMUXs) 83. Circuits that process an optical signal prior to the optical signal being input to the photodiodes 10 in the optical integrated circuit 1 are collectively referred to as an optical circuit. The optical circuit separates an optical signal input to optical integrated circuit 1 into an optical signal propagating in the TE mode and an optical signal propagating in the TM mode. In the optical integrated circuit 1 according to this embodiment, an optical signal propagating in the TE mode is assumed to be associated with a first optical signal. An optical signal propagating in the TM mode is assumed to be associated with a second optical signal.

In the optical integrated circuit 1, an optical signal in which a TE-mode optical signal and a TM-mode optical signal are mixed together and n wavelengths are mixed together is input to the edge coupler 811. The polarizing splitter rotator 82 separates the TE-mode optical signal and the TM-mode optical signal from each other. In addition, the polarizing splitter rotator 82 converts the TM-mode optical signal into a TE-mode optical signal. The demultiplexers 83 further separate each of the optical signals separated by the polarizing splitter rotator 82 into optical signals of n wavelengths.

The photodiodes 10-1 to n are respectively input with signals obtained by separating the TE-mode optical signal by wavelength, and signals obtained by converting the TM-mode optical signal to an TE-mode optical signal and separating the TE-mode optical signal by wavelength. As a result, each of the photodiodes 10-1 to n outputs an electrical signal corresponding to the intensity of a signal separated by wavelength from the optical signal input to the edge coupler 811, which is a mixture of the TE and TM modes.

In this embodiment, the optical integrated circuit 1 may further include a transimpedance amplifier that converts electrical signals output from the photodiodes 10. In this embodiment, the optical integrated circuit 1 can detect optical signals for each wavelength using a single photodiode, compared to the case where two light-receiving elements are used to detect a TE-mode optical signal and a TM-mode optical signal for each wavelength. In this way, faster speeds can be achieved due to reductions in parasitic capacitances, or reductions in power consumption and circuit size can be achieved.

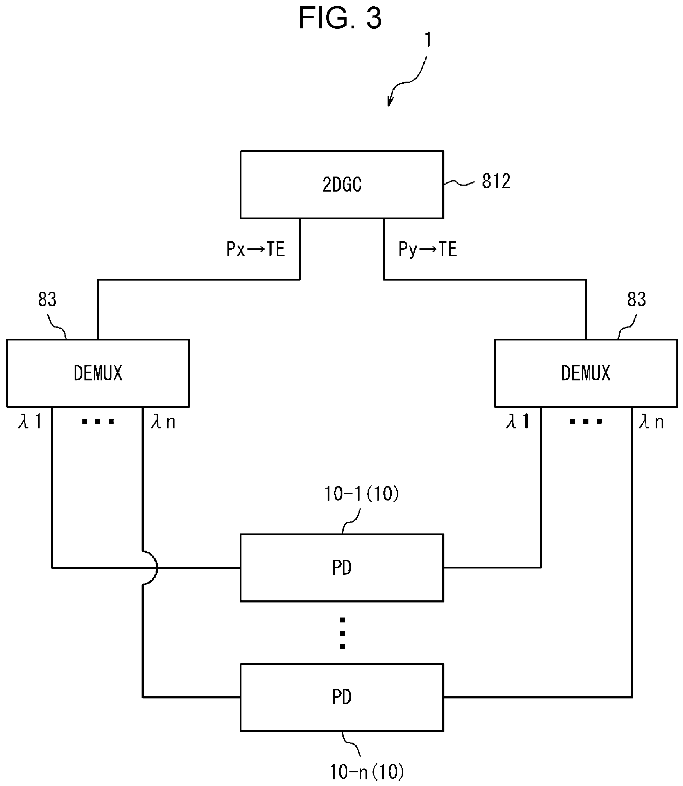

As illustrated in FIG. 3, the optical integrated circuit 1 may include a two-dimensional grating coupler (2DGC) 812 as the input unit 81. The two-dimensional grating coupler 812 separates the input optical signal into two polarization components Px and Py, and outputs each polarization component as an optical signal having a TE-mode polarization. The demultiplexers 83 separate the optical signals of each polarization component by wavelength. The photodiodes 10-1 to n are each input with a signal obtained by separating an optical signal of a polarization component Px by wavelength, and a signal obtained by separating an optical signal of a polarization component Py by wavelength. As a result, each of the photodiodes 10-1 to n outputs an electrical signal corresponding to the intensity of a signal separated by wavelength from the optical signal input to the two-dimensional grating coupler 812, which is a mixture of the TE and TM modes. When the optical integrated circuit 1 includes the two-dimensional grating coupler 812, the optical integrated circuit 1 does not need to include the polarizing splitter rotator 82.

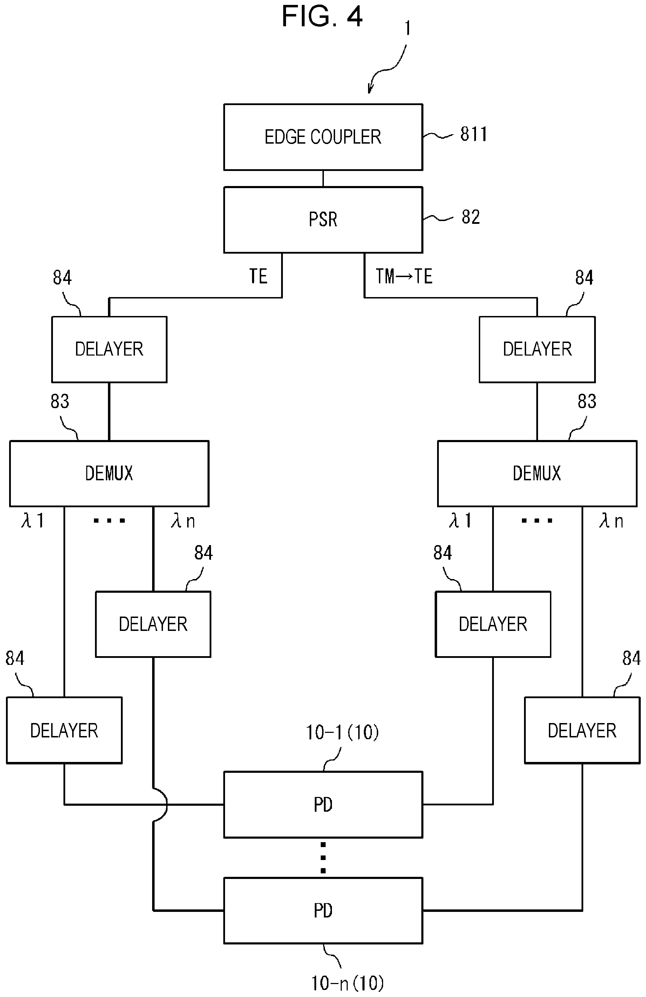

As illustrated in FIG. 4, the optical integrated circuit 1 may further include delayers 84 between the polarizing splitter rotator 82 and each of two demultiplexers 83, and between the demultiplexers 83 and each of n photodiodes 10-1 to n. The delayers 84 delay the propagation of optical signals. The optical integrated circuit 1 compensates for differences in delay between the optical signals caused by manufacturing errors in waveguides using the delayers 84. As a result of including the delayers 84, the optical integrated circuit 1 can reduce jitter of signals obtained by combining a TE-mode optical signal and a TE-mode optical signal converted from the TM-mode optical signal output from the photodiodes 10.

The delayers 84 may be, for example, configured as waveguides having a prescribed length, and the effective refractive index of the waveguides may be adjustable using a heater. The delayers 84 may be configured as phase modulators having a prescribed length and may be configured so that the amount of phase modulation can be adjusted by applying a voltage.

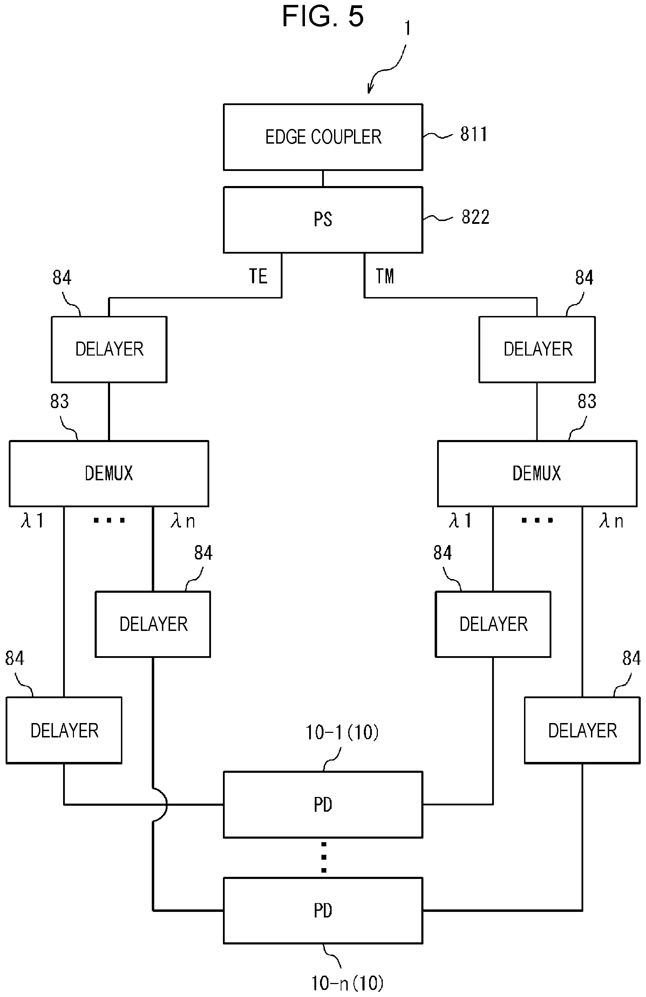

As illustrated in FIG. 5, the polarizing splitter rotator 82 in the optical integrated circuit 1 may be replaced with a polarizing splitter (PS) 822. The polarizing splitter 822 splits an input optical signal into a TE-mode optical signal and a TM-mode optical signal. The TE-mode optical signal and the TM-mode optical signal have different propagation speeds from each other. The optical integrated circuit 1 may include the delayers 84 to compensate for differences in delay between the TE-mode optical signal and the TM-mode optical signal.

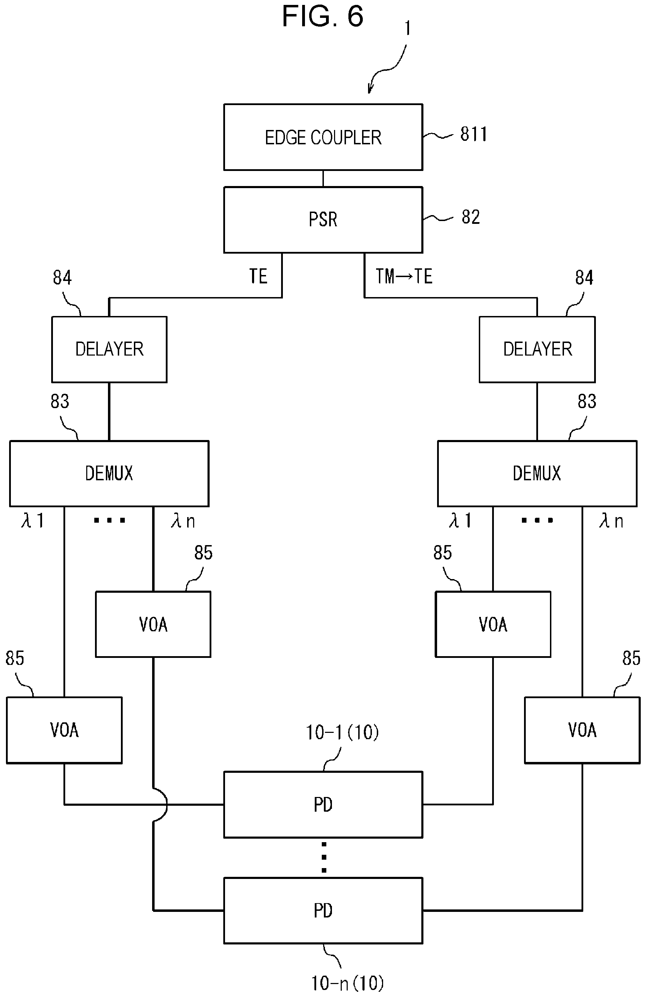

As illustrated in FIG. 6, the delayers 84 connected between the demultiplexers 83 and each of the n photodiodes 10-1 to n in the optical integrated circuit 1 illustrated in FIG. 2 may be replaced with variable optical attenuators (VOAs) 85. The variable optical attenuators 85 may include silicon pin diodes, for example. The variable optical attenuators 85 absorb light and attenuate light intensity in response to being injected with a current. By adjusting the current injected into each variable optical attenuator 85, the optical loss that occurs in the polarizing splitter rotator 82 or the demultiplexer 83 can be compensated for. Therefore, even if optical loss in the polarizing splitter rotator 82 or the demultiplexers 83 is not uniform due to differences in the polarization or wavelength of the optical signals, the light-reception sensitivity of optical signals with any polarization or wavelength can be made to approach uniformity by decreasing the current values of the variable optical attenuators 85 through which optical signals having high optical loss pass and increasing the current values of the variable optical attenuators 85 through which optical signals having low optical loss pass.

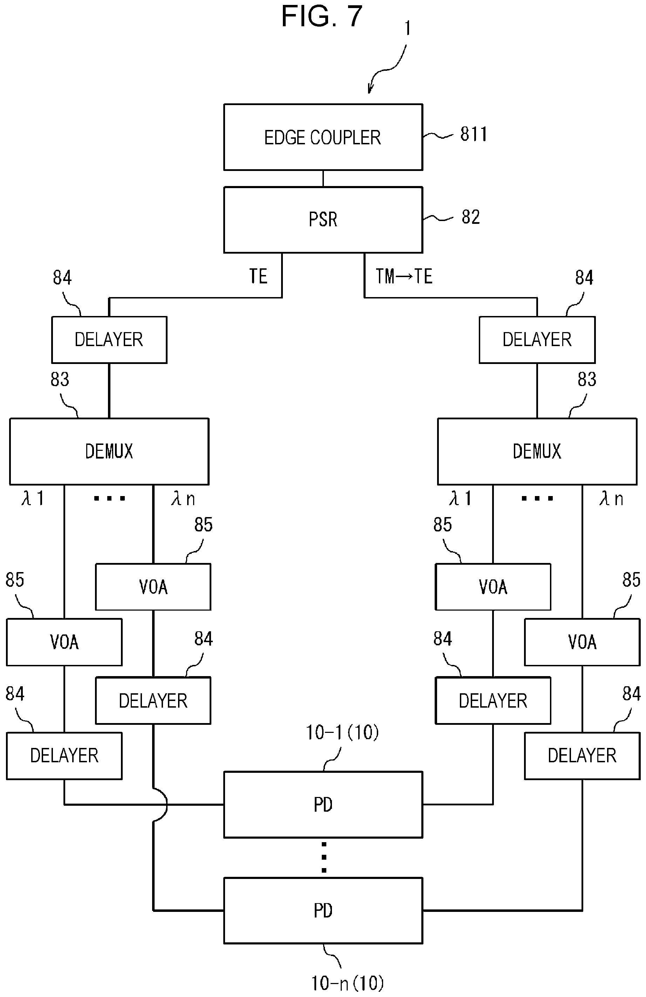

As illustrated in FIG. 7, the optical integrated circuit 1 may include both variable optical attenuators 85 and delayers 84 between the demultiplexers 83 and each of the n photodiodes 10-1 to n.

(Example Configuration of Optical Integrated Circuit 200)

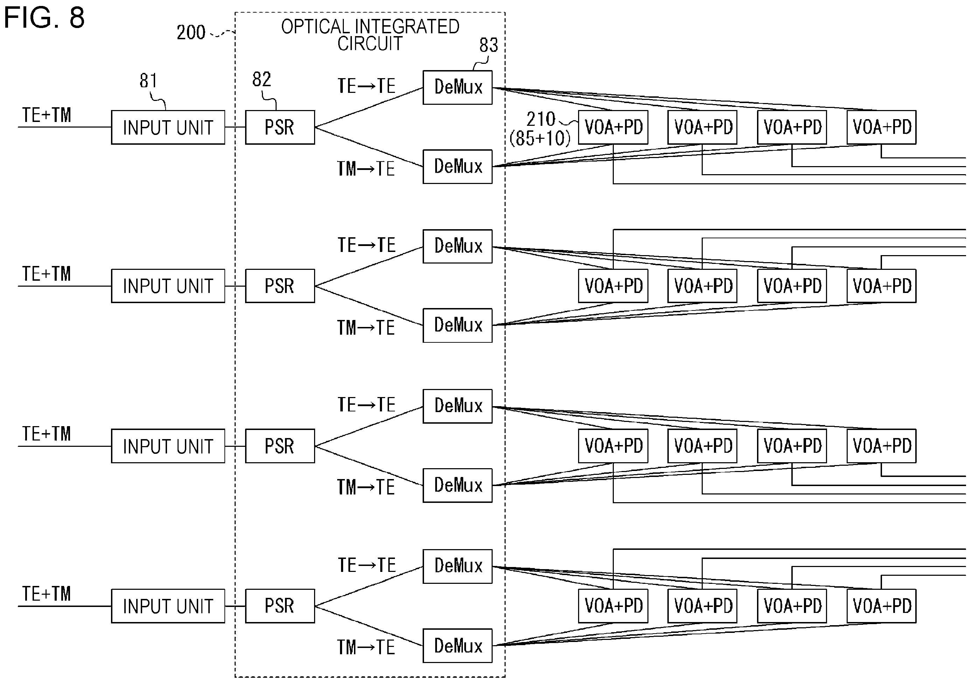

In an embodiment, an optical integrated circuit 200 includes polarizing splitter rotators (PSRs) 82 and demultiplexers (DEMUXs) 83, as illustrated in FIG. 8. The polarizing splitter rotators 82 may be replaced with polarizing splitters 822, as described below. The optical integrated circuit 200 is connected between input units 81 of a former stage and detection elements 210 of a latter stage. The detection elements 210 are assumed to include VOAs 85 and PDs 10. The detection elements 210 may be configured to include the PDs 10 but not include the VOAs 85. The optical integrated circuit 200 may further include PDs 10 (photodetectors). The polarizing splitter rotators 82 or the polarizing splitters 822 are also referred to as first elements. The demultiplexers 83 are also referred to as second elements. In other words, the optical integrated circuit 200 includes the first elements having a function of separating each polarization from electromagnetic waves including multiple polarizations, or a function of rotating at least some of the polarizations after separating each polarization from electromagnetic waves including multiple polarizations. The optical integrated circuit 200 also includes the second elements having a function of separating components of multiple wavelengths included in the electromagnetic waves into components of each wavelength. In the optical integrated circuit 200, the first elements and the second element are connected to each other in a cascade-like manner. The optical integrated circuit 200 may further include polarizers inserted between the first elements and the second elements. The polarizers are elements that allow linearly polarized light to pass therethrough in a specific direction.

Each input unit 81 receives electromagnetic waves including a TE-mode polarization and a TM-mode polarization. The polarizing splitter rotator 82 separates the electromagnetic waves input to the input unit 81 into a TE-mode polarization and a TM-mode polarization, rotates the TM-mode polarization to a TE-mode polarization, and outputs the separated electromagnetic waves to the demultiplexers 83. When the optical integrated circuit 200 includes the polarizing splitter 822, the polarizing splitter 822 separates the electromagnetic waves input to the input unit 81 into a TE-mode polarization and a TM-mode polarization and outputs the separated electromagnetic waves to the demultiplexers 83. Each demultiplexer 83 separates the corresponding polarization including multiple wavelength components into each wavelength component and outputs the separated waves to the detection elements 210. The detection elements 210 detect each wavelength component of the TE-mode polarization and each wavelength component of the TM-mode polarization (or the TM-mode polarization obtained by rotating the separated TM-mode polarization).

<Example Configuration of Polarizing Splitter Rotator 82>

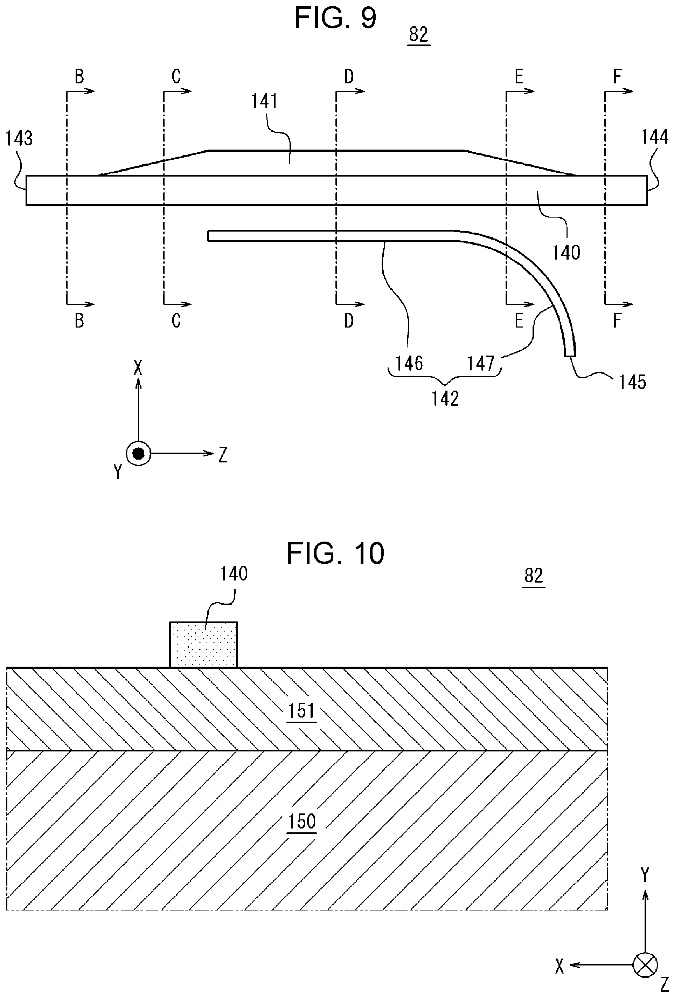

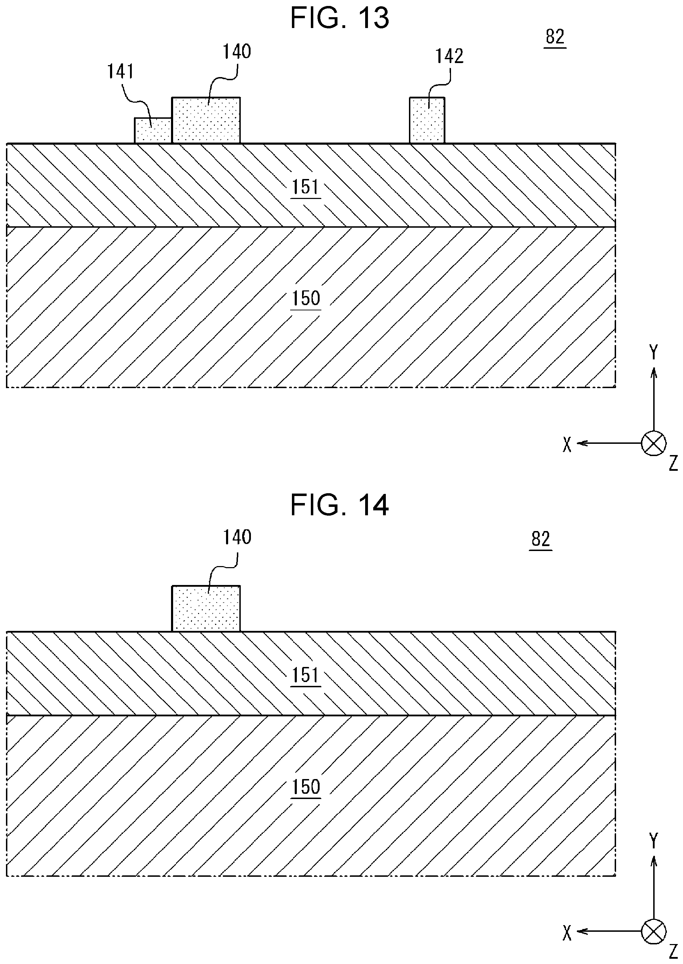

As illustrated in FIG. 9, as well as FIGs. 10, 11, 12, 13, and 14, the polarizing splitter rotator 82 according to an embodiment includes a first waveguide 140 and a second waveguide 142. The first waveguide 140 and the second waveguide 142 are assumed to be formed on an insulating layer 151 of a substrate 150. The substrate 150 may be composed of various materials such as silicon. The insulating layer 151 may be composed of various materials such as silicon dioxide. At least part of each of the first waveguide 140 and the second waveguide 142 extends in a first direction (Z-axis direction). At least part of the first waveguide 140 and at least part of the second waveguide 142 may be positioned parallel to each other.

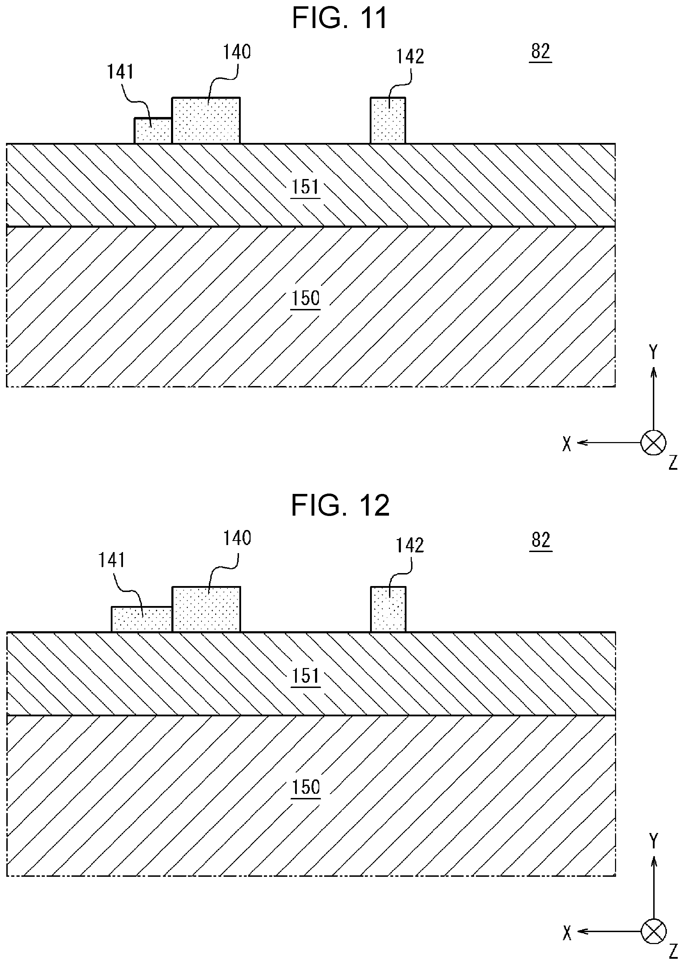

The first waveguide 140 includes an asymmetrical part 141 that is asymmetrical in a cross-section, a normal to which is the first direction (Z-axis direction), as illustrated in FIGS. 11, 12, and 13. In addition, the first waveguide 140 does not have linear symmetry with respect to a normal to the surface of the substrate 50 in a cross-section to which a normal is the first direction. In this embodiment, the cross-sectional shape of the first waveguide 140 is asymmetrical, but the cross-sectional shape of the second waveguide 142 may be asymmetrical. The cross-sectional shape of at least one of the first waveguide 140 or the second waveguide 142 may be asymmetrical.

The first waveguide 140 includes a first port 143 at the end of the first waveguide 140 on the negative direction side of the Z-axis, and a second port 144 at the end of the first waveguide 140 on the positive direction side of the Z-axis, i.e., the end on the opposite side from the first port 143.

The second waveguide 142 includes a first part 146 that is positioned along the first waveguide 140 and a second part 147 that becomes increasingly separated from the first waveguide 140 as one moves in the positive direction of the Z-axis. The second part 147 may be configured as a curved portion, or may be configured in a straight shape that is inclined with respect to the direction in which the first waveguide 140 extends. The second part 147 is positioned further toward the positive direction side of the Z axis than the first part 146 is. The second part 147 includes a third port 145 at the end of the second part 147 on the opposite side from the side of the second part 147 that is connected to the first part 146.

The first port 143 of the first waveguide 140 may be configured to allow input of electromagnetic waves. The second port 144 may be configured to allow output of electromagnetic waves. The third port 145 of the second waveguide 142 may be configured to allow output of electromagnetic waves. The electromagnetic waves input to the first port 143 travel along the first waveguide 140 in the positive direction of the Z-axis. At least part of the electromagnetic waves traveling along the first waveguide 140 is transferred to the second waveguide 142.

The electromagnetic waves that remain in the first waveguide 140 travel to the second port 144 and are output from the second port 144. The electromagnetic waves that remain in the second waveguide 142 travel to the third port 145 and are output from the third port 145.

The second port 144 of the first waveguide 140 may be configured to allow input of electromagnetic waves. The third port 145 of the second waveguide 142 may be configured to allow input of electromagnetic waves. The first port 143 of the first waveguide 140 may be configured to allow output of electromagnetic waves. Electromagnetic waves input to the second port 144 travel along the first waveguide 140 in the negative direction of the Z-axis. On the other hand, electromagnetic waves input to the third port 145 travel through the first part 146 of the second waveguide 142 in the negative direction of the Z-axis and then are transferred to the first waveguide 140. As a result, in the first waveguide 140, the combined electromagnetic waves, which are the sum of the electromagnetic waves input to the second port 144 and the electromagnetic waves input to the third port 145, travel in the negative direction of the Z-axis. The combined electromagnetic waves travel to the first port 143 and are output from the first port 143.

In this case, the first waveguide 140 and the second waveguide 142 may be configured to separate a first polarization and a second polarization and to output the first polarization from the second port 144 and the second polarization from the third port 145 when electromagnetic waves including the first polarization and the second polarization are input to the first port 143. Conversely, the first waveguide 140 and the second waveguide 142 may be configured to output electromagnetic waves obtained by combining the respective polarizations from the first port 143 when electromagnetic waves of the first polarization are input to the second port 144 and electromagnetic waves of the second polarization are input to the third port 145. The above-described configuration can be realized, for example, by designing the shape of the asymmetrical part 141 of the first waveguide 140 or the length or spacing etc. of the parts where the first waveguide 140 and the second waveguide 142 are positioned alongside each other, as appropriate. In this embodiment, the first polarization is assumed to be the TE-mode polarization. The second polarization is assumed to be the TM-mode polarization.

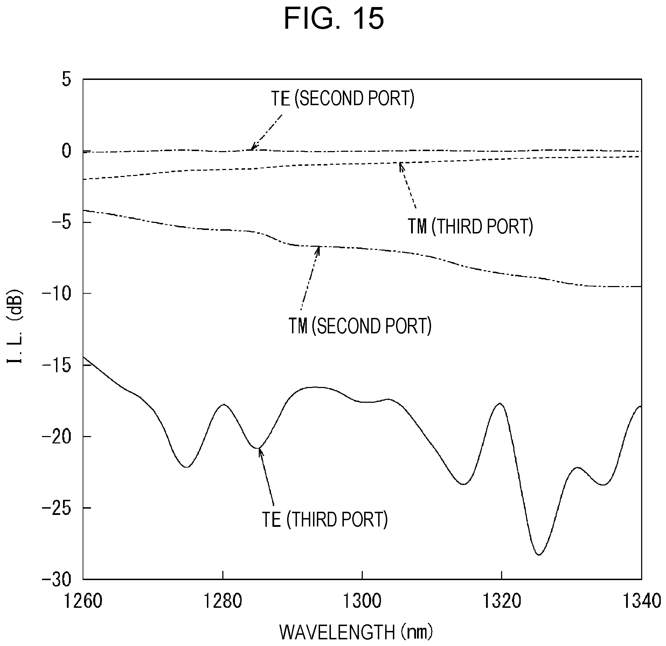

FIG. 15 illustrates the results of a simulation of the characteristics of the polarizing splitter rotator 82 according to this embodiment. In the graph in FIG. 15, the horizontal axis represents wavelength. The units of wavelength are nm (nanometers). The vertical axis represents connection loss (insertion loss IL). The units of connection loss are assumed to be dB (decibels). In the simulation, electromagnetic waves including the TE-mode polarization and the TM-mode polarization are input to the first port 143. The TE-mode polarization component output from the second port 144 is illustrated by a single-dot dashed line. The TM-mode polarization component output from the second port 144 is illustrated by a two-dot dashed line. The TE-mode polarization component output from the third port 145 is illustrated by a solid line. The TM-mode polarization component output from the third port 145 is illustrated by a dashed line. As illustrated in the graph in FIG. 15, the electromagnetic waves output from the second port 144 contain a large amount of TE-mode polarization. The electromagnetic waves output from the third port 145 contain a large amount of TM-mode polarization. In other words, according to the simulation, the polarizing splitter rotator 82 according to this embodiment can separate the TE-mode polarization and the TM-mode polarization.

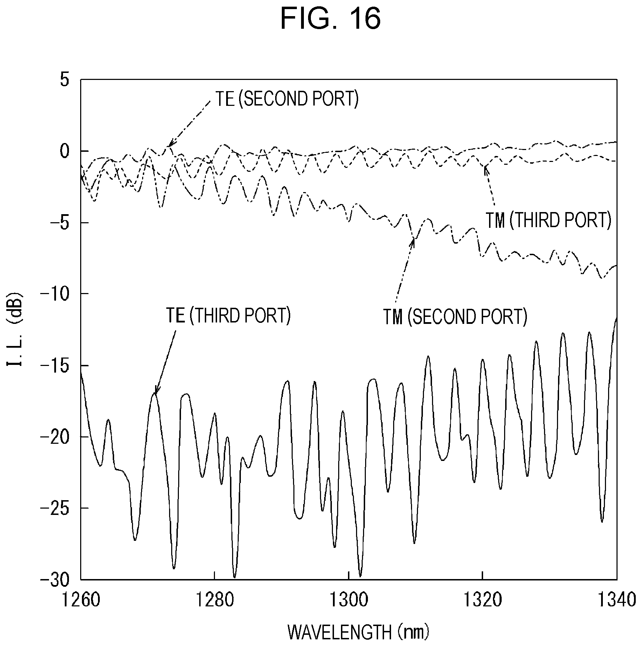

FIG. 16 illustrates the results of measuring the characteristics of the polarizing splitter rotator 82 according to this embodiment. In the graph in FIG. 16, the horizontal axis represents wavelength. The units of wavelength are nm (nanometers). The vertical axis represents insertion loss (IL). The units of insertion loss are dB (decibels). When making the measurements, electromagnetic waves including the TE-mode polarization and the TM-mode polarization are input to the first port 143. The measured values of TE-mode polarization component output from the second port 144 are illustrated by a single-dot dashed line. The measured values of TM-mode polarization component output from the second port 144 are illustrated by a two-dot dashed line. The measured values of the TE-mode polarization component output from the third port 145 are illustrated by a solid line. The measured values of the TM-mode polarization component output from the third port 145 are illustrated by a dashed line. As illustrated in the graph in FIG. 16, the electromagnetic waves output from the second port 144 contain a large amount of TE-mode polarization. The electromagnetic waves output from the third port 145 contain a large amount of TM-mode polarization. In other words, according to the measurement results as well, the polarizing splitter rotator 82 according to this embodiment can separate the TE-mode polarization and the TM-mode polarization.

In this embodiment, the polarizing splitter rotator 82 may include the first waveguide 140 and the second waveguide 142. At least part of the first waveguide 140 and at least part of the second waveguide 142 may be positioned alongside each other along the first direction (the Z-axis direction in FIG. 8). The first waveguide 140 may include the first port 143 configured to allow input or output of electromagnetic waves including a first polarization (for example, TE-mode polarization) and a second polarization (for example, TM-mode polarization), and the second port 144 configured to allow output of the first polarization, which has been separated, or input of the first polarization. The second waveguide 142 may include the third port 145 configured to allow output of the second polarization that has been separated or the second polarization that has been separated and rotated, or input of the second polarization. A cross-sectional shape, a normal to which is the first direction (Z-axis direction in FIG. 8), of at least one of the first waveguide 140 or the second waveguide 142 does not need to have linear symmetry. A cross-sectional shape, a normal to which is the first direction (Z-axis direction in FIG. 8), of the first waveguide 140 may be asymmetrical.

The first part 146 of the second waveguide 142 may be configured so that the line width thereof is not constant. The first part 146, for example, may be configured to have a tapered shape that becomes narrower on the side where the first port 143 is located and becomes wider on the side connected to the second part 147. The first part 146 may be configured as an adiabatic tapered waveguide. The second waveguide 142 may be configured to rotate the TM-mode polarization separated from the first waveguide 140 and output the rotated polarization as the TE-mode polarization from the third port 145.

The first waveguide 140 and the second waveguide 142 may be formed to include silicon. The first waveguide 140 and the second waveguide 142 may be formed on the silicon substrate 150. Since the waveguides are formed using silicon, elements including the polarizing splitter rotator 82 can be easily manufactured using silicon photonics technology. The first waveguide 140 and the second waveguide 142 may be formed to include not only silicon but also various other dielectric materials.

In an embodiment, the polarizing splitter rotator 82 may include an asymmetrical directional coupler structure. The polarizing splitter rotator 82 may be configured such that the first waveguide 140, which includes input/output ports on both sides, has an asymmetrical shape, and the second waveguide, which has an input/output port on one side and branches from or merges with the first waveguide 140, has a symmetrical shape. In other words, the polarizing splitter rotator 82 may include a cross-output port designed as a symmetrical waveguide. Configuring the polarizing splitter rotator 82 in this manner allows the width of the asymmetrically shaped waveguide to be increased. For example, the width of an asymmetrically shaped waveguide can be 300 nanometers (300 nm) or more. As a result, the polarizing splitter rotator 82 can have a structure that can be manufactured in a commercial foundry. The term "commercial foundry" may refer to any foundry capable of mass production, regardless of scale.

The dimensions or shapes of elements mass-produced at commercial foundries have manufacturing tolerances. As a structure for relaxing manufacturing tolerances, the width of a waveguide with a symmetrical shape may be designed to be non-constant. Thus, the element has a structure that is robust against manufacturing tolerances.

As discussed above, a polarizing splitter rotator 82 having a simple structure can be realized by using an asymmetrical directional coupler structure. In addition, the polarizing splitter rotator 82 can be manufactured in commercial foundries by designing the polarizing splitter rotator 82 so that the width of a symmetrically shaped waveguide is not constant.

<Example Configuration of Demultiplexer 83>

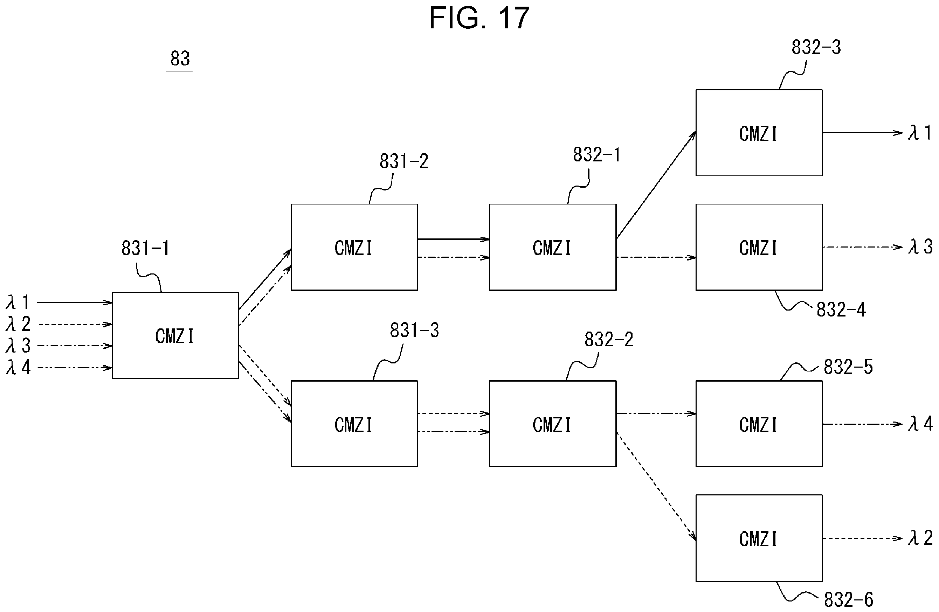

As illustrated in FIG. 17, the demultiplexer 83 may include cascaded delay Mach-Zehnder interferometers (CMZI). Let us suppose that electromagnetic waves input to the demultiplexer 83 contain components of four wavelengths. The wavelengths are represented as λ1, λ2, λ3, and λ4. In this example configuration, the wavelengths have the following values.

$$\lambda 1 = 1.27 \ \mu m$$

$$\lambda 2 = 1.29 \ \mu m$$

$$\lambda 3 = 1.31 \ \mu m$$

$$\lambda 4 = 1.33 \ \mu m$$

The demultiplexer 83 may be configured to split the electromagnetic waves into two sets of electromagnetic waves using a combination of a CMZI 831-1, a CMZI 831-2, and a CMZI 831-3, and output one set of electromagnetic waves from the CMZI 831-2 and the other set of electromagnetic waves from the CMZI 831-3. In the example of FIG. 17, electromagnetic waves including λ1 and λ3 are output from the CMZI 831-2. Electromagnetic waves including λ2 and λ4 are output from the CMZI 831-3.

The demultiplexer 83 may be configured to split the electromagnetic waves output from the CMZI 831-2 into two sets of electromagnetic waves using a combination of a CMZI 832-1, a CMZI 831-3, and a CMZI 831-4, output one set of electromagnetic waves from the CMZI 832-3, and output the other set of electromagnetic waves from the CMZI 832-4. In the example of FIG. 17, electromagnetic waves including λ1 are output from the CMZI 832-3. Electromagnetic waves including λ3 are output from the CMZI 832-4.

The demultiplexer 83 may be configured to split the electromagnetic waves output from the CMZI 831-3 into two sets of electromagnetic waves using a combination of a CMZI 832-2, a CMZI 831-5, and a CMZI 831-6, output one set of electromagnetic waves from a CMZI 832-5, and output the other set of electromagnetic waves from a CMZI832-6. In the example in FIG. 17, electromagnetic waves including λ2 are output from the CMZI 832-6. Electromagnetic waves including λ4 are output from the CMZI 832-5.

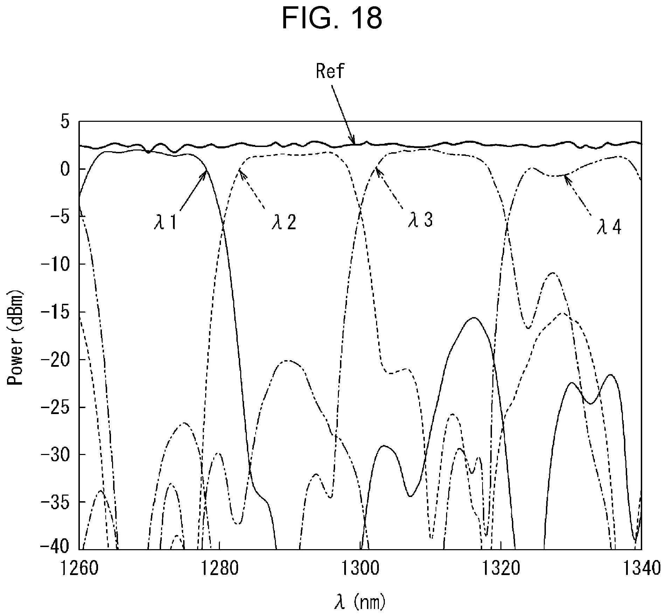

FIG. 18 illustrates the results of measuring the loss characteristics of the demultiplexer 83 according to this embodiment. In the graph in FIG. 18, the horizontal axis represents wavelength. The units of wavelength are nm (nanometers). The vertical axis represents power.

The units of power are dBm (decibel milliwatts). The larger the value on the vertical axis is (as the plot of the graph rises), the smaller the loss is. In the actual measurement, electromagnetic waves including components with wavelengths of λ1 to λ4 are input to the CMZI 831-1. The input electromagnetic waves are represented by a fat solid line (Ref). The measured values of the component output from the CMZI 832-3 are illustrated by a solid line. The measured values of the component output from the CMZI 832-4 are illustrated by a single-dot dashed line. The measured values of the component output from the CMZI 832-5 are illustrated by a two-dot dashed line. The measured values of the component output from the CMZI 832-6 are illustrated by a dashed line. As illustrated in the graph in FIG. 18, the component output from each CMZI contains many components of different wavelengths. In other words, even in the measurement results, the demultiplexer 83 according to this embodiment can separate the components of each wavelength λ1 to λ4.

<Characteristics of Rib-Type Waveguide>

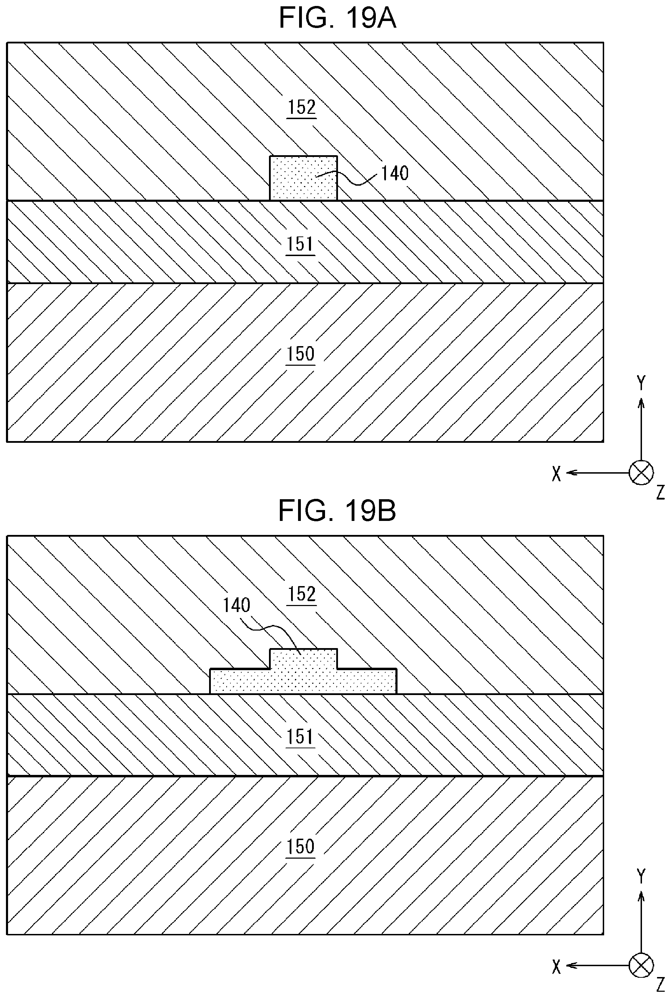

Waveguides of the demultiplexer 83 may be configured as a strip-type waveguide as illustrated in FIG. 19A, or may be configured as a rib-type waveguide as illustrated in FIG. 19B. Strip-type waveguides have a rectangular cross-sectional shape. At least part of the cross-sectional shape of rib-type waveguides is shaped like a protrusion. The waveguide may include a part having a protruding shape, a part having a rectangular shape, and a part that connects the protruding shape and the rectangular shape to each other so that the shape changes smoothly.

The waveguide may have a protruding shape in a part connecting a first element including the polarizing splitter rotator 82 or the polarizing splitter 822 and a second element including the demultiplexer 83, or in a part connecting wavelength multiplexing/demultiplexing elements in a second element. The waveguide may include a part having a protruding shape, a part having a rectangular shape, and a part connecting the protruding shape and the rectangular shape so that the shape changes smoothly in a part connecting a first element and a second element, or in a part connecting the wavelength multiplexing/demultiplexing elements in a second element. The waveguide may include a curved portion in a part connecting a first element and a second element, or in a part connecting the wavelength multiplexing/demultiplexing elements in a second element.

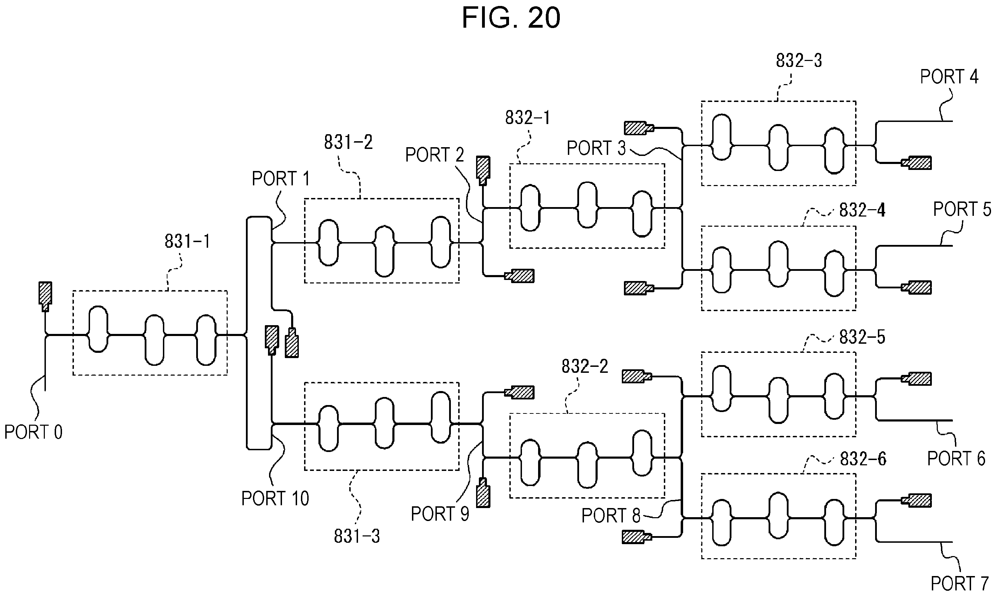

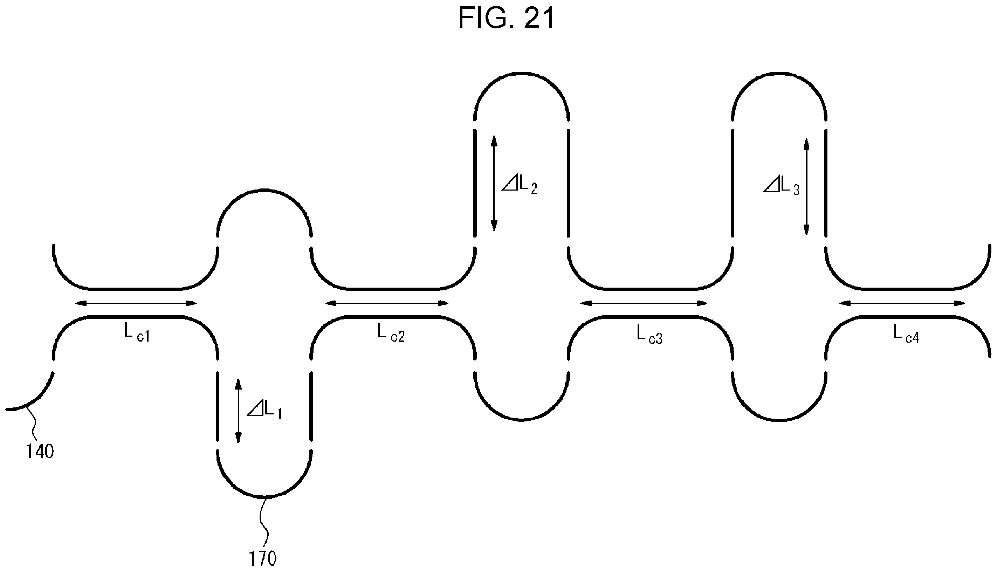

The waveguides and ports of the demultiplexer 83 may be disposed as illustrated in FIG. 20. Each wavelength multiplexing/demultiplexing element may be configured as illustrated in FIG. 21. The wavelength multiplexing/demultiplexing element includes first waveguide portions each configured such that two waveguides are positioned alongside each other and second waveguide portions that each include a delay line 170 such that the two waveguides thereof are of different lengths. The wavelength multiplexing/demultiplexing element illustrated in FIG. 21 includes four first waveguide portions and three second waveguide portions between the first waveguide portions. In FIG. 21, the lengths of the four first waveguide portions are represented as Lc1, Lc2, Lc3, and Lc4, respectively. The differences in one-way length of the two waveguides in the three second waveguide portions are expressed as ΔL1, ΔL2, and ΔL3, respectively. That is, the differences in the round trip lengths of the two waveguides in the three second waveguide portions are expressed as ΔL1x2, ΔL2x2, and ΔL3x2, respectively. The units are μm (micrometers). The structure of each wavelength multiplexing/-demultiplexing element can be specified using these seven parameters.

Each wavelength multiplexing/demultiplexing element includes two waveguides that are physically connected to each other. The two waveguides are electromagnetically coupled with each other in the first waveguide portions. When electromagnetic waves input to one of the two waveguides are output from the same waveguide without being altered, the output port is also referred to as a straight port. In other words, the wavelength multiplexing/demultiplexing element includes an output port on a straight side of the directional coupler. A straight port is a port that is physically connected by the waveguide from the input port of the electromagnetic waves.

When electromagnetic waves input to one of the two waveguides is transferred to the other waveguide and then output, the output port is also referred to as a cross port. In other words, the wavelength multiplexing/-demultiplexing element includes an output port on a cross side of the directional coupler. A cross port is a port that is electromagnetically coupled but not physically connected by the waveguide from the input port of the electromagnetic waves.

Among the multiple wavelength multiplexing/-demultiplexing elements in the demultiplexer 83, wavelength multiplexing/demultiplexing elements connected later than the first stage may include an output port on the straight side of the directional coupler. In addition, when a first group of the demultiplexer 83 includes wavelength multiplexing/demultiplexing elements connected in N stages and a second group of the demultiplexer 83 includes wavelength multiplexing/demultiplexing elements connected in M stages, the wavelength multiplexing/demultiplexing elements connected from the M+1 stage to the M+N stage may include an output port on the straight side of the directional coupler.

The output to the cross port is sensitive to manufacturing tolerances of the elements. In other words, the sensitivity of the output to the cross port to the manufacturing tolerances of the elements is large. As a result of the demultiplexer 83 including the output port on the straight side of the directional coupler, the effects of manufacturing tolerances of the elements can be reduced. For example, the CMZI 831-2 may be designed so that output from the side of the CMZI 831-1 (the CMZI 831-2 side) from which output is performed to a cross port is made to a straight port in the CMZI 831-2.

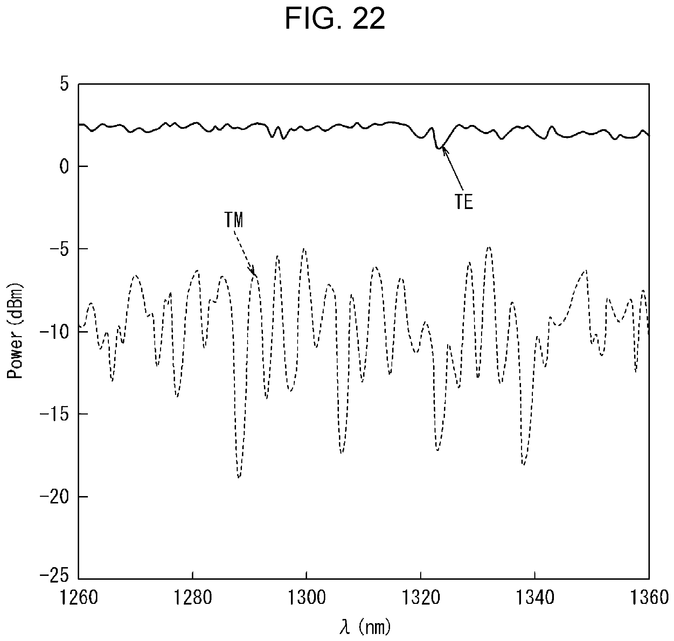

FIG. 22 illustrates the measurement results of the magnitude of loss when the TE-mode polarization and the TM-mode polarization propagate through a rib-type waveguide. In the graph in FIG. 22, the horizontal axis represents wavelength. The units of wavelength are nm (nanometers). The vertical axis represents power. The units of power are dBm (decibel milliwatts). The larger the value on the vertical axis is (as the plot of the graph rises), the smaller the loss is. According to FIG. 22, the loss of the TE-mode polarization traveling through the first waveguide 140 is smaller than the loss of the TM-mode polarization over a wide wavelength range. In other words, the rib-type waveguide can radiate and attenuate the TM-mode polarization over a wide wavelength range.

In the rib-type waveguide, the loss of TM-mode polarization can be large. By connecting the demultiplexer 83 that uses rib-type waveguides to a stage after the polarizing splitter rotator 82, TM-mode polarization that was not completely separated by the polarizing splitter rotator 82 can be radiated. By radiating the TM-mode polarization with the demultiplexer 83, the extinction ratio can be increased over a wide band. As a result, a wavelength multiplexing optical integrated circuit that is independent of polarization can be realized.

<Characteristics of Optical Integrated Circuit 200>

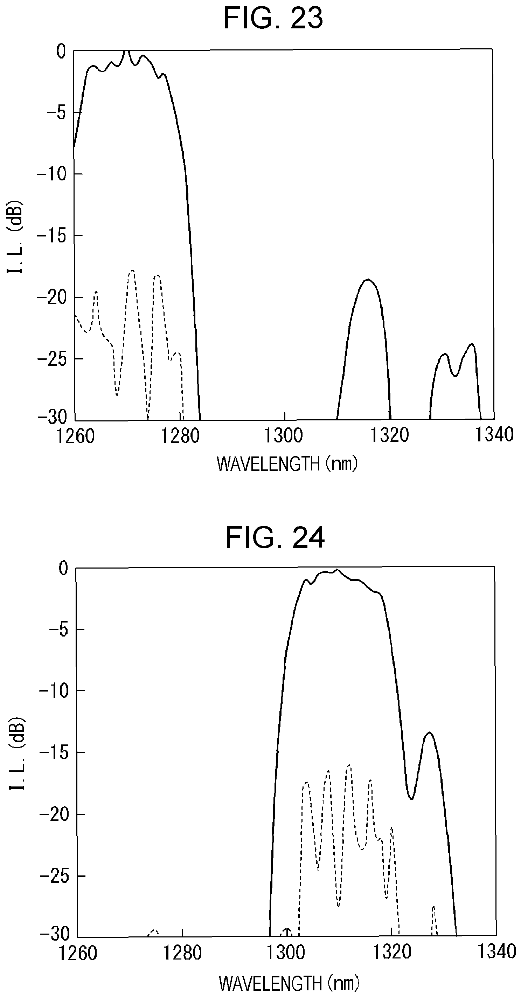

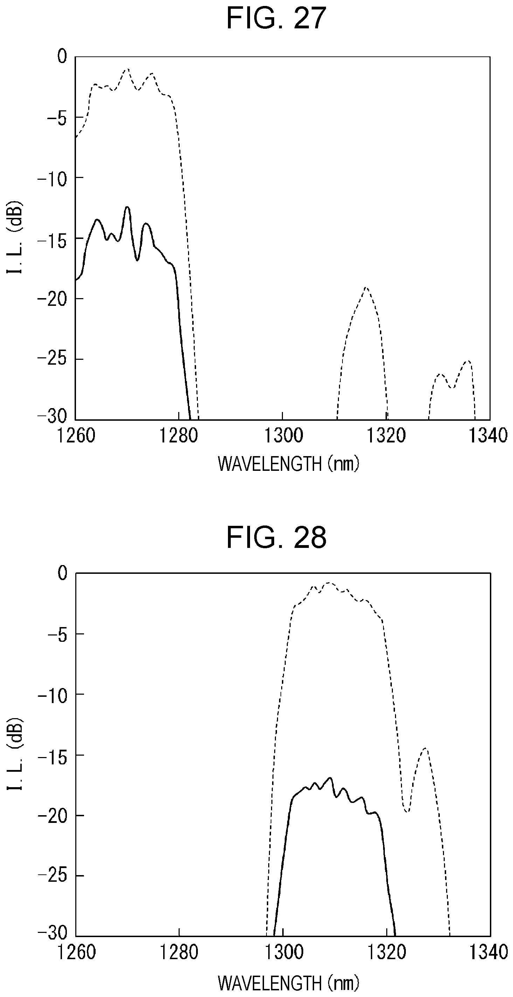

The characteristics of the optical integrated circuit 200 can be expressed as the connection loss of each component separated by the polarizing splitter rotator 82 and the demultiplexers 83. FIGs. 23, 24, 25, and 26 illustrate, as measurement results, the characteristics when the TE-mode polarization is separated into components of each wavelength by the demultiplexer 83 connected to the port of the polarizing splitter rotator 82 that outputs the TE-mode polarization. FIGs. 27, 28, 29, and 30 illustrate, as measurement results, the characteristics when the TM-mode polarization is separated into components of each wavelength by the demultiplexer 83 connected to the port of the polarizing splitter rotator 82 that outputs the TM-mode polarization. In the graphs in FIGs. 23 to 30, the horizontal axis represents wavelength. The units of wavelength are nm (nanometers). The vertical axis represents insertion loss (IL). The units of insertion loss are dB (decibels). When making the measurements, we assume that electromagnetic waves including the TE-mode polarization and the TM-mode polarization, and including at least wavelength components of λ1 to λ4, are input to the polarizing splitter rotator 82.

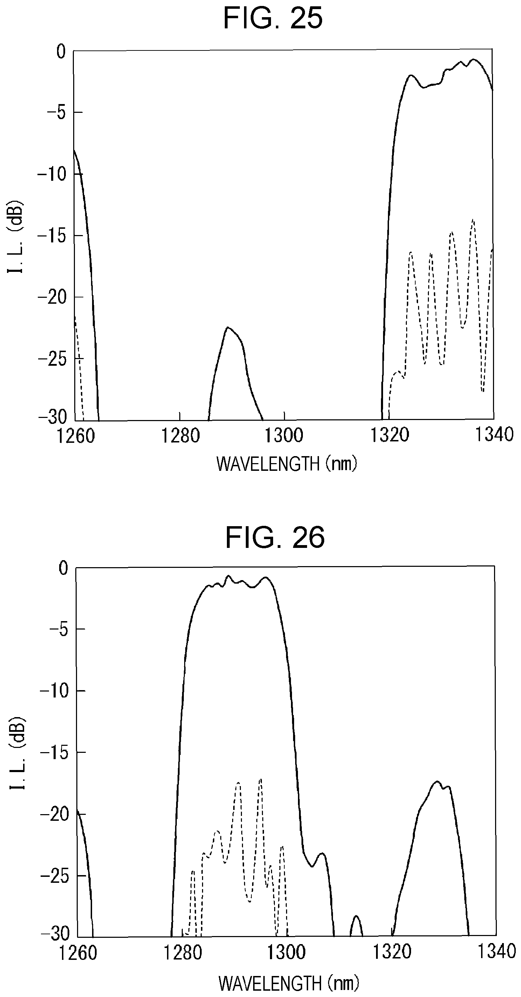

In FIG. 23, the TE-mode polarization component output from the CMZI 832-3 of the demultiplexer 83 connected to the port of the polarizing splitter rotator 82 that outputs the TE-mode polarization is illustrated by a solid line. The TM-mode polarization component is illustrated by a dashed line. In FIG. 24, the TE-mode polarization component output from the CMZI 832-4 of the demultiplexer 83 is illustrated by a solid line. The TM-mode polarization component is illustrated by a dashed line. In FIG. 25, the TE-mode polarization component output from the CMZI 832-5 of the demultiplexer 83 is illustrated by a solid line. The TM-mode polarization component is illustrated by a dashed line. In FIG. 26, the TE-mode polarization component output from the CMZI 832-6 of the demultiplexer 83 is illustrated by a solid line. The TM-mode polarization component is illustrated by a dashed line. According to FIGs. 23 to 26, the optical integrated circuit 200 can separate the TE-mode polarization component by attenuating the TM-mode polarization component using the polarizing splitter rotator 82.

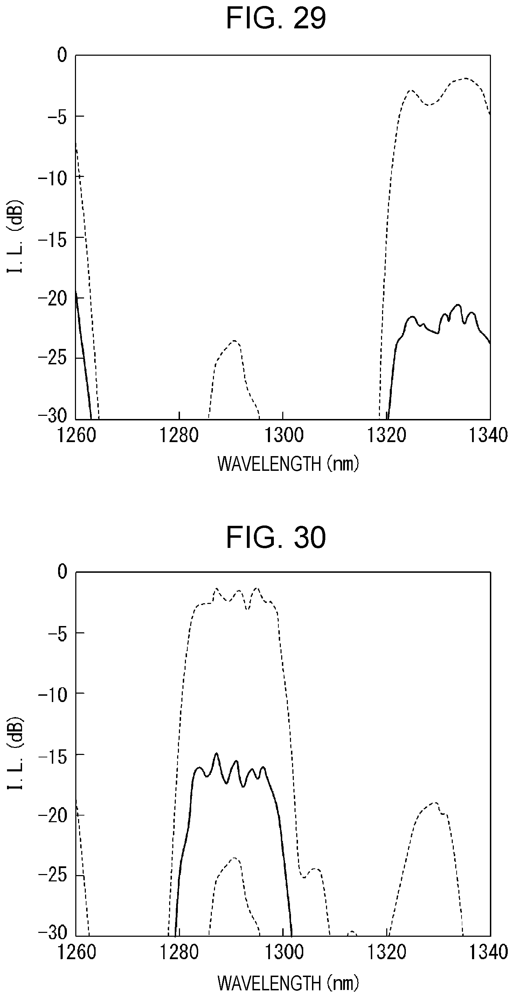

In FIG. 27, the TE-mode polarization component output from the CMZI 832-3 of the demultiplexer 83 connected to the port of the polarizing splitter rotator 82 that outputs the TM-mode polarization is illustrated by a solid line. The TM-mode polarization component is illustrated by a dashed line. In FIG. 28, the TE-mode polarization component output from the CMZI 832-4 of the demultiplexer 83 is illustrated by a solid line. The TM-mode polarization component is illustrated by a dashed line. In FIG. 29, the TE-mode polarization component output from the CMZI 832-5 of the demultiplexer 83 is illustrated by a solid line. The TM-mode polarization component is illustrated by a dashed line. In FIG. 30, the TE-mode polarization component output from the CMZI 832-6 of the demultiplexer 83 is illustrated by a solid line. The TM-mode polarization component is illustrated by a dashed line. According to FIGs. 27 to 30, the optical integrated circuit 200 can separate the TM-mode polarization component by attenuating the TE-mode polarization component using the polarizing splitter rotator 82.

<Optical Transceiver>

The optical integrated circuit 200 according to this embodiment may be used in an optical transceiver. In other words, an optical transceiver according to this embodiment may include the optical integrated circuit 200 according to this embodiment.

(Another Example Configuration of Optical Integrated Circuit 200)

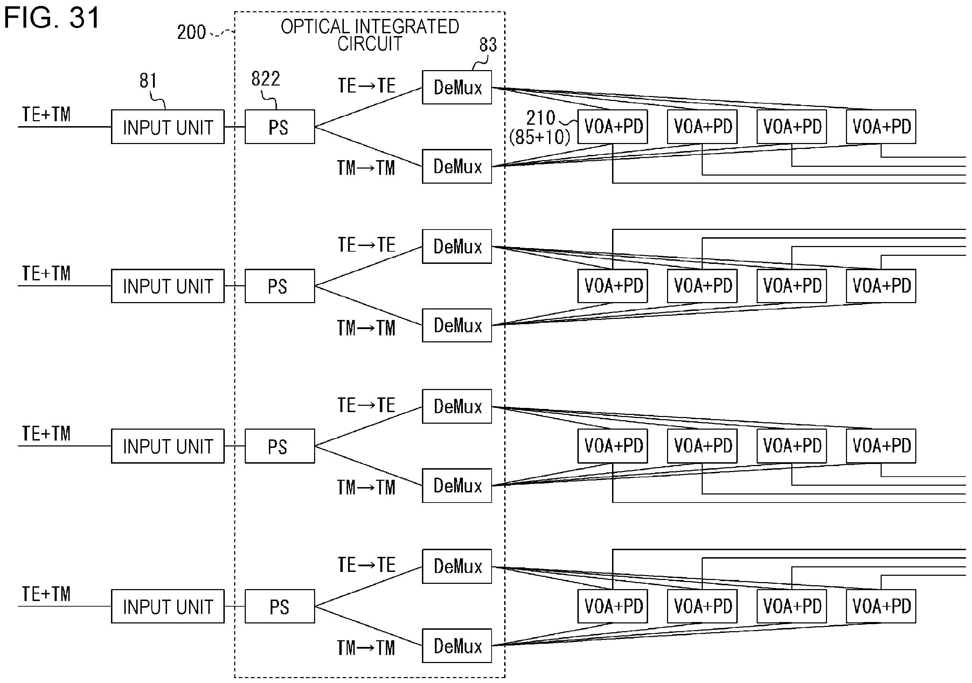

In an embodiment, the optical integrated circuit 200 includes polarizing splitters (PSs) 822 and demultiplexers (DEMUXs) 83, as illustrated in FIG. 31. The optical integrated circuit 200 illustrated in FIG. 31 corresponds to a circuit obtained by replacing the polarizing splitter rotators 82 in the optical integrated circuit 200 illustrated in FIG. 8 with polarizing splitters 822. The polarizing splitters 822 corresponds to first elements having a function of separating each polarization from electromagnetic waves including multiple polarizations. That is, the optical integrated circuit 200 may include polarizing splitters 822 having a function of separating each polarization from electromagnetic waves including multiple polarizations as first elements. The optical integrated circuit 200 illustrated in FIG. 8 and the optical integrated circuit 200 illustrated in FIG. 31 differ from each other only in that the polarizing splitter rotators 82 in FIG. 8 are replaced with the polarizing splitters 822 in FIG. 31, and otherwise have the same configuration.

<Summary>

As described above, the optical integrated circuit 200 according to this embodiment can radiate and attenuate TM-mode polarization in a wide wavelength range using rib-type waveguides. As a result, the extinction ratio can be improved across a wide band. In addition, in the optical integrated circuit 200 according to this embodiment, the polarizing splitter rotators 82 or the polarizing splitters 822 and the demultiplexers 83 are connected to each other in cascade-like manner. Consequently, the optical transceiver including the optical integrated circuit 200 according to this embodiment can simultaneously realize polarization diversity and wavelength multiplexing that can be fabricated using standard processes in a silicon photonics foundry.

Although embodiments of the present disclosure have been described based on the drawings and examples, please note that one skilled in the art can make various variations or changes based on the present disclosure. Please note that, therefore, these variations or changes are included within the scope of the present disclosure. For example, the functions and so on included in each constituent part can be rearranged in a logically consistent manner, and multiple constituent parts and so on can be combined into one part or divided into multiple parts. Please understand that the scope of the present disclosure also includes these forms.

In the present disclosure, "first", "second", and so on are identifiers used to distinguish between such configurations. Regarding the configurations, "first", "second", and so on used to distinguish between the configurations in the present disclosure may be exchanged with each other. For example, identifiers "first" and "second" may be exchanged between the first waveguide 140 and the second waveguide 142. Exchanging of the identifiers takes place simultaneously. Even after exchanging the identifiers, the configurations are distinguishable from each other. The identifiers may be deleted. The configurations that have had their identifiers deleted are distinguishable from each other by symbols. Just the use of identifiers such as "first" and "second" in this disclosure is not to be used as a basis for interpreting the order of such configurations or the existence of identifiers with smaller numbers.

In the present disclosure, the X-axis, the Y-axis, and the Z-axis are provided for convenience of explanation and may be interchanged with each other. The configurations of the present disclosure have been described using a Cartesian coordinate system consisting of the X-axis, the Y-axis, and the Z axis. The positional relationship between configurations in the present disclosure is not limited to a Cartesian relationship.

In an embodiment, (1) an optical integrated circuit includes a first element having a function of separating each polarization from electromagnetic waves including multiple polarizations, or a function of rotating at least some of the polarizations after separating each polarization from electromagnetic waves including multiple polarizations, and a second element having a function of separating components of multiple wavelengths included in the electromagnetic waves into components of each wavelength, and the first element and the second element are connected to each other in a cascade-like manner.

(2) In the optical integrated circuit according to (1) above, the first element may include a first waveguide and a second waveguide.

(3) In the optical integrated circuit according to (2) above, the first waveguide and the second waveguide may be positioned parallel to each other.

(4) In the optical integrated circuit according to (2) or (3) above, a cross section of at least one of the first waveguide and the second waveguide does not need to have linear symmetry.

(5) In the optical integrated circuit according to any one of (2) to (4) above, a waveguide between the first element and the second element or included in the second element may include a curved portion.

(6) In the optical integrated circuit according to any one of (2) to (5) above, at least part of a waveguide between the first element and the second element or included in the second element may have a protruding shape.

(7) In the optical integrated circuit according to (6) above, a waveguide between the first element and the second element or included in the second element may include a part having the protruding shape, a part having a rectangular shape, and a part connecting the protruding shape and the rectangular shape with a change in shape occurring smoothly.

(8) The optical integrated circuit according to any one of (1) to (7) above may include a polarizer inserted between the first element and the second element.

(9) The optical integrated circuit according to any one of (1) to (8) above may be formed using silicon photonics technology.

(10) The optical integrated circuit according to any one of (1) to (9) above may include a photodetector.

In an embodiment, (11) an optical transceiver may include the optical integrated circuit of any one of (1) to (10) above.

REFERENCE SIGNS

1, 200 optical integrated circuit (81: input unit, 811: edge coupler, 812: two-dimensional grating coupler (2DGC), 82: polarizing splitter rotator (PSR), 822: polarizing splitter (PS), 83: demultiplexer (DEMUX), 831-1 to 3: CMZI, 832-1 to 6: CMZI, 84: delayer, 85: variable optical attenuator (VOA))

10 photodiode

50 substrate

140 first waveguide (141: asymmetrical part, 143: first port, 144: second port)

142 second waveguide (145: third port, 146: first part, 147: second part)

150 substrate (151: insulating layer)

170 delay line

210 detection element

**Claims**

1. An optical integrated circuit comprising: a first element having a function of separating each polarization from electromagnetic waves including multiple polarizations, or a function of rotating at least some of the polarizations after separating each polarization from electromagnetic waves including multiple polarizations; and a second element having a function of separating components of multiple wavelengths included in the electromagnetic waves into components of each wavelength, wherein the first element and the second element are connected to each other in a cascade-like manner.

2. The optical integrated circuit according to claim 1, wherein the first element includes a first waveguide and a second waveguide.

3. The optical integrated circuit according to claim 2, wherein the first waveguide and the second waveguide are positioned parallel to each other.

4. The optical integrated circuit according to claim 2, wherein a cross section of at least one of the first waveguide and the second waveguide does not have linear symmetry.

5. The optical integrated circuit according to claim 2, wherein a waveguide between the first element and the second element or included in the second element includes a curved portion.

6. The optical integrated circuit according to claim 2, wherein at least part of a waveguide between the first element and the second element or included in the second element has a protruding shape.

7. The optical integrated circuit according to claim 6, wherein a waveguide between the first element and the second element or included in the second element includes a part having the protruding shape, a part having a rectangular shape, and a part connecting the protruding shape and the rectangular shape with a change in shape occurring smoothly.

8. The optical integrated circuit according to any one of claims 1 to 7, further comprising: a polarizer inserted between the first element and the second element.

9. The optical integrated circuit according to any one of claims 1 to 7, wherein the optical integrated circuit is formed using silicon photonics technology.

10. The optical integrated circuit according to any one of claims 1 to 7, further comprising: a photodetector.

11. An optical transceiver comprising: the optical integrated circuit according to any one of claims 1 to 7.

# FIG. 1

# FIG. 2

# FIG. 3

1

| 2DGC | ~ 812 |

Px→TE          Py→TE

83                                        83

| DEMUX |                    | DEMUX |

λ1  • • •  λn                    λ1  • • •  λn

10-1(10)

| PD |

⋮

| PD |

10-n(10)

# FIG. 4

# FIG. 5

# FIG. 6

1

EDGE COUPLER — 811

PSR — 82

84                    TE          TM→TE                    84

DELAYER                              DELAYER

83                                          83

DEMUX                                DEMUX

λ1  • • •  λn          λ1  • • •  λn

85                                          85

VOA                                  VOA

85                                          85

VOA          10-1 (10)          VOA

PD

⋮

PD

10-n (10)

# FIG. 7

FIG. 8

OPTICAL INTEGRATED CIRCUIT

200

83

81

82

TE+TM → INPUT UNIT → PSR

TE→TE → DeMux
210 (85+10)
TM→TE → DeMux

VOA+PD  VOA+PD  VOA+PD  VOA+PD

TE+TM → INPUT UNIT → PSR

TE→TE → DeMux
TM→TE → DeMux

VOA+PD  VOA+PD  VOA+PD  VOA+PD

TE+TM → INPUT UNIT → PSR

TE→TE → DeMux
TM→TE → DeMux

VOA+PD  VOA+PD  VOA+PD  VOA+PD

TE+TM → INPUT UNIT → PSR

TE→TE → DeMux
TM→TE → DeMux

VOA+PD  VOA+PD  VOA+PD  VOA+PD

EP 4 589 350 A1

# FIG. 9

82

# FIG. 10

# FIG. 11

# FIG. 12

# FIG. 13

# FIG. 14

# FIG. 15

## FIG. 16

# FIG. 17

_83_

# FIG. 18

# FIG. 19A

# FIG. 19B

# FIG. 20

FIG. 21

# FIG. 22

## FIG. 23

## FIG. 24

## FIG. 25

## FIG. 26

# FIG. 27

# FIG. 28

## FIG. 29

## FIG. 30

FIG. 31

EP 4 589 350 A1

## INTERNATIONAL SEARCH REPORT

| International application No. |
|---|
| **PCT/JP2023/032137** |

**A. CLASSIFICATION OF SUBJECT MATTER**

***G02B 6/126***(2006.01)i; ***G02B 6/12***(2006.01)i; ***G02B 6/122***(2006.01)i; ***G02B 6/125***(2006.01)i; ***G02B 6/42***(2006.01)i
FI:  G02B6/126; G02B6/12 331; G02B6/125 301; G02B6/125; G02B6/122 311; G02B6/12 301; G02B6/42

According to International Patent Classification (IPC) or to both national classification and IPC

**B. FIELDS SEARCHED**

Minimum documentation searched (classification system followed by classification symbols)

G02B6/12-6/14; G02B6/42; G02F1/00-1/125

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

IEEE Xplore

**C. DOCUMENTS CONSIDERED TO BE RELEVANT**

| Category* | Citation of document, with indication, where appropriate, of the relevant passages | Relevant to claim No. |
|---|---|---|
| X | US 2010/0322631 A1 (INFINERA CORP.) 23 December 2010 (2010-12-23)<br>paragraphs [0048]-[0051], fig. 13 | 1-3, 5-6, 8, 10, 11 |
| Y | | 4, 7, 9 |
| Y | WATTS, M.R. et al., "Towards integrated polarization diversity: design, fabrication, and characterization of integrated polarization splitters and rotators", OFC/NFOEC Technical Digest. Optical Fiber Communication Conference, 2005, PDP11, 06 March 2005, pp. 1-3<br>p. 2, line 2 from the bottom to p. 3, line 3, fig. 1(a), 3(a)(i)-3(a)(iii) | 4, 11 |
| Y | WO 2009/096321 A1 (NEC CORP.) 06 August 2009 (2009-08-06)<br>paragraph [0005], fig. 1 | 7, 9, 11 |
| X | WO 2014/147821 A1 (FUJITSU LTD.) 25 September 2014 (2014-09-25)<br>paragraphs [0002], [0020], [0021], fig. 1 | 1-2, 5, 9-11 |
| A | US 2016/0246005 A1 (CORIANT ADVANCED TECHNOLOGY, LLC) 25 August 2016 (2016-08-25)<br>fig. 1, 9 | 1-11 |

✔ Further documents are listed in the continuation of Box C.    ✔ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 October 2023** | **24 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2023/032137**

**C.    DOCUMENTS CONSIDERED TO BE RELEVANT**

| Category* | Citation of document, with indication, where appropriate, of the relevant passages | Relevant to claim No. |
|---|---|---|
| A | JP 2017-44780 A (OKI ELECTRIC INDUSTRY CO., LTD.) 02 March 2017 (2017-03-02) paragraphs [0056]-[0060], fig. 6 | 1-11 |
| A | CN 105223647 A (JIANGSU SUNFY OPTOELECTRONICS TECHNOLOGY CO., LTD.) 06 January 2016 (2016-01-06) fig. 3 | 1-11 |
| A | XU, Q. et al., "Broadband Polarization-Independent Directional Coupler Using Asymmetric-Waveguides", IEEE PHOTONICS JOURNAL, December 2019, vol. 11, no. 6, Art no. 6603506, pp. 1-6 entire text, all drawings | 1-11 |
| A | DAI, D. et al., "Novel concept for ultracompact polarization splitter-rotator based on silicon nanowires", OPTICS EXPRESS, 23 May 2011, vol. 19, no. 11, pp. 10940-10949 entire text, all drawings | 1-11 |

Form PCT/ISA/210 (second sheet) (January 2015)

## INTERNATIONAL SEARCH REPORT
### Information on patent family members

International application No.

**PCT/JP2023/032137**

| Patent document cited in search report | | | Publication date (day/month/year) | Patent family member(s) | | | Publication date (day/month/year) |
|---|---|---|---|---|---|---|---|
| US | 2010/0322631 | A1 | 23 December 2010 | US | 2010/0322628 | A1 | |
| | | | | US | 2010/0320370 | A1 | |
| | | | | US | 2010/0322629 | A1 | |
| | | | | WO | 2011/005597 | A2 | |
| | | | | WO | 2011/005596 | A2 | |
| | | | | EP | 2446309 | A2 | |
| | | | | EP | 2446310 | A2 | |
| | | | | CN | 102549462 | A | |
| | | | | CN | 102483488 | A | |
| WO | 2009/096321 | A1 | 06 August 2009 | (Family: none) | | | |
| WO | 2014/147821 | A1 | 25 September 2014 | US | 2015/0381301 | A1 | |
| | | | | paragraphs [0002], [0032], [0033], fig. 1A | | | |
| US | 2016/0246005 | A1 | 25 August 2016 | US | 2018/0100969 | A1 | |
| | | | | US | 2020/0003954 | A1 | |
| | | | | US | 2016/0248519 | A1 | |
| | | | | US | 2016/0248521 | A1 | |
| | | | | US | 2019/0089465 | A1 | |
| | | | | US | 2020/0153512 | A1 | |
| | | | | WO | 2016/134323 | A1 | |
| | | | | WO | 2016/134325 | A1 | |
| | | | | WO | 2016/134328 | A1 | |
| JP | 2017-44780 | A | 02 March 2017 | (Family: none) | | | |
| CN | 105223647 | A | 06 January 2016 | (Family: none) | | | |

Form PCT/ISA/210 (patent family annex) (January 2015)

**EP 4 589 350 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022148601 A
- JP 2022197457 A
- JP 2020194092 A

40